(19) Europäisches Patentamt
European Patent Office
Office européen des brevets

(11) **EP 2 182 333 A1**

(12) **EUROPEAN PATENT APPLICATION**

(43) Date of publication:
**05.05.2010 Bulletin 2010/18**

(51) Int Cl.:
***G01F 1/74*** *(2006.01)*

(21) Application number: **08167872.4**

(22) Date of filing: **29.10.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Nederlandse Centrale Organisatie Voor Toegepast Natuurwetenschappelijk Onderzoek TNO 2628 VK Delft (NL)** | (72) Inventor: **The designation of the inventor has not yet been filed**<br><br>(74) Representative: **Hatzmann, Martin et al Vereenigde Johan de Wittlaan 7 2517 JR Den Haag (NL)** |

(54) **A method, a system and a computer program for a non-intrusive determination of respective flow rates of constituents in a two-phase flow**

(57) The invention relates to a method 10 for a non-intrusive determination of respective flow rates of constituents in a two-phase fluid flowing in a conduit. First, at step 1 data corresponding to an acoustic and/or mechanical reaction of a material of the conduit to a passage of the multiphase fluid there through may be acquired.

At step 2, flow-related parameters may be determined from the data. At steps 4a and 4b use is made of a model, which analytically relates the flow-related parameters obtainable from the data with flow rates. Respective flow rates for the constituents of the two-phase liquid are obtained from the flow-related parameters at step 8.

Fig. 1

## Description

FIELD

The invention relates to a method, a system and a computer program product for a non-intrusive determination of respective flow rates of constituents in a multiphase fluid flowing in a conduit. More in particular the invention relates to a method, a system and a computer program product for determining flow rates of gas and liquid in a two-phase fluid flowing in a conduit.

BACKGROUND OF THE INVENTION

An embodiment of a method as is set forth in the opening paragraph is known from I. Ismail et al "Tomography for multi-phase flow measurement in the oil industry", Flow Measurement and Instrumentation 16 (2005) pp. 145 - 155. The known method utilizes a tomography unit which is arranged to obtain cross-sectional images of a fluid flowing in a conduit, for example in an oil pipeline. The cross-sectional images are generated for two positions along the conduit to provide information on the flow data in two cross-sections. After images of the respective cross-sections are analyzed with regard to volume fractions of fluid phases, detected therein, a flow velocity profile for each phase can be obtained.

It is a disadvantage of the known method that costly equipment, like a tomography apparatus, has to be used for obtaining flow rate data. In addition, the known method requires substantial calculation effort for analyzing cross-sectional images representing the flow. Finally, tomography equipment is technically sophisticated, thus costly and cannot easily be made portable. Next, the tomography equipment does not easily lend itself for a submerged use, for example for seabed applications.

Another embodiment of a method for a determination of flow rates in a two-phase liquid flow is known from E.S. Johansen et al "A prototype wet-gas and multiphase flowmeter", proceedings of the 25th North Sea Flow Measurement Workshop 16th -19th October 2007. In the known method a field-proved downhole non-fiber-optic multiphase flowmeter is used. The flow-meter is based on an extended throat Venturi-nozzle and a sonar flowmeter.

The disadvantage of this method is that an intrusive body, i.e. the Venturi nozzle has to be introduced into the liquid conduit for carrying out the measurements. Such arrangement is cumbersome and requires shutting down of the fluid transport for its installation. In addition, due to the fact that such arrangement is not portable, maintenance service is complicated.

SUMMARY OF THE INVENTION

It is an object of the invention to provide a method for a non-intrusive determination of respective flow rates of constituents in a multi-phase fluid flowing in a conduit, for example, in a gas/liquid mixture, which substantially simplifies technology necessary for determination of the phase flow rates, thereby decreasing capital expenditures. In particular, it is an object of the invention to provide a portable system for enabling determination of respective flow rates in a gas/liquid mixture.

To this end the method according to the invention comprises the steps of:

- acquiring data corresponding to a reaction of a material of the conduit to a passage of the multi-phase fluid there through;
- determining one or more parameters related to the respective flow rates from said data;
- applying said one or more parameters in a model for determining the respective flow rates.

The invention is based on the insight that a material of a conduit wherein a fluid is flowing is acoustically and/or mechanically responsive to the flow, which may be manifested by an acoustic wave propagating along a wall of the conduit in response to an inner flow. For given material properties of the conduit and its geometry, a quantitative measure of such acoustical and/or mechanical response is linked to absolute values of the flow rates of respective phases in the fluid. Thus, by measuring data corresponding to an acoustical and/or mechanical response of the wall material of the conduit, it is possible to deduce flow-related parameters and subsequently to apply them in a suitable model relating such flow-related parameters to the sought flow rates. For implementing such methodology relatively simple sensors may suffice, substantially simplifying an overall architecture of a measurement system. It will be appreciated that the method according to the invention is applicable to a wide range of phase flow rates covering various flow regimes, e.g. a slug flow regime, an annular regime or a stratified regime. In addition, it will be appreciated that the method according to the invention is particularly simple and reliable for a two-phase gas-liquid flow.

In an embodiment of a method according to the invention, the data comprises data related to acoustical and/or mechanical disturbance propagating in a wall of a conduit.

It is found that the conduit mechanically responds to an inner flow of a fluid by dislocating its wall, for example by expanding or contracting or by any other typical form of deformation. Therefore, by measuring a displacement, a velocity, or an acceleration of the wall data can be collected which are linked to flow rate data of the multi-phase flow.

Therefore, by measuring one of the above parameters it is possible to determine the flow rates of constituents of a multi-phase, for example, a two-phase fluid flowing in the conduit. Additionally or alternatively, the acoustic and/or mechanical response of the wall may be determined by measuring expansion or contraction of the conduit wall.

In a further embodiment of the method according to the invention, the data is acquired as a filtered signal, preferably in a form of a spectrogram.

It is found to be advantageous to acquire a filtered signal for data processing. It will be appreciated that a great plurality of possible filtering techniques may be suitable for practicing the invention. In particular, a spectrogram characteristic to a conduit's wall behaviour pursuant to an inner flow may be acquired. The spectrogram may be integrated over a frequency domain. This yields a pattern outlining the original signal in a time domain. This pattern may be further processed, for example it may be suitably scaled for cutting it off below a threshold and setting its values at a predefined level above the threshold. Subsequently, the signal may be differentiated yielding an assembly of peaks in the time domain. The peaks may be used for extraction of essential flow-related parameters, like a velocity and frequency of phasic structures (constituents) occurring in the flow. Alternatively, other per se known filtering methods may be used, for example Butterworth filters, or a signal pre-processed with Hilbert transformation and the like.

To extract the frequency of the flow, the peaks may be counted and their number may be divided by the time in which the peaks occur. To extract velocity of the flow, it is possible to use signals generated by a number of consecutively installed sensors along the conduit. It will be appreciated that two or more consecutively installed sensors with respect to a flow direction are contemplated. Subsequently, a signal generated by an upstream sensor may be overlapped on the signal generated by a downstream sensor. In the two overlapping signals a time lag between respective peaks may be detected. The time lag in combination with a known distance between the sensors yield the velocity of the phase structures of a flow.

It will be appreciated that although use of a spectrogram is discussed with reference to data extraction, other suitable techniques for deducing suitable parameters, like frequency and velocity from data corresponding to a reaction of a material of the conduit to a passage of the multi-phase fluid there through are contemplated.

Preferably, in an embodiment of the method according to the invention, relating to slug mode, the model may comprise the following equations:

$$u_{slug} = (a + b\ln(cU_m))U_m$$

$$f_{slug} = d\left(\frac{U_{sl}}{gD}(\frac{e}{U_m} + U_m)\right)^f ,$$

where

$u_{slug}$ - is a slug velocity;
$f_{slug}$ - is a slug frequency
$U_m$ - is a mixture velocity;
g - is a gravitational acceleration;
D - is a diameter of the conduit;
a ,b, c, d, e, f, - coefficients.

The model may be semi-empirical, that is, it may be adapted, for example, by adapting coefficients a, b, c, d, e and f for a specific wall material of the conduit as well as for a specific diameter of the conduit.

It will be appreciated that for another flow mode than a slug flow, other suitable models, including empirical models may be used.

In a still further embodiment of the method according to the invention, wherein the conduit is a part of a fluid delivery system, the method further comprises a step of adapting one or more control parameters of the fluid delivery system based on the determined flow rates.

It is found to be advantageous to provide a feedback to, for example, a fluid delivery system for controlling and /or for adapting flow parameters of the fluid. This may be implemented by suitable controlling valves present in the conduit. It will be appreciated that the fluid delivery system is not limited to an embodiment featuring controlling valves.

A system for a non-intrusive determination of respective flow rates of constituents in a multi-phase fluid flowing in a conduit, according to the invention, comprises:

- input for providing data corresponding to a response of a material of the conduit to a passage of the multiphase fluid there through;
- processor for:

  i. determining one or more parameters related to the respective flow rates from said data;
  ii. applying said one or more parameters in a model for determining the respective flow rates.

Further advantageous embodiments of the system according to the invention are set forth in claims 10 - 16.

In a particular embodiment of the system according to the invention, the system is adapted to operate in subsea conditions. For example, for this purpose the sensor may be provided in a water-tight implementation.

Preferably, in an embodiment of system according to the invention, the sensor is arranged to communicate the data wirelessly.

This feature enables remote data collection, which is advantageous in situations when sensor or sensors are considerably dislocated with respect to the processing unit, for example, when the sensors are arranged on conduits running along the seabed.

A computer program product, according to the invention, comprises instructions for causing a processor to carry out the steps of the method as is discussed with reference to the foregoing.

These and other aspects of the invention will be discussed with reference to drawings, wherein like reference signs represent like elements. It will be appreciated that the drawings are presented for illustrative purposes only and that they may not be used for limiting the scope of the appended claims.

BRIEF DESCRIPTION OF THE DRAWINGS

Figure 1 presents in a schematic way an embodiment of the method according to the invention.
Figure 2 presents in a schematic way an embodiment of a system according to the invention.
Figure 3 presents in a schematic way a further embodiment of a system according to the invention.

DETAILED DESCRIPTION OF THE DRAWINGS

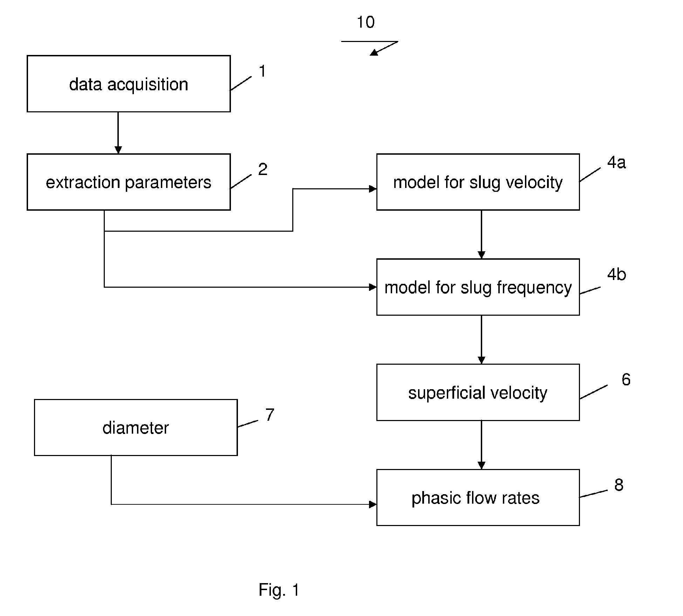

Figure 1 presents in a schematic way an embodiment of the method according to the invention. It will be appreciated that although the current embodiment refers to a method of a non-intrusive determination of flow rates in a two-phase flow, its application, in a modified form, to a flow having three or more phases is contemplated. The method 10 for a non-intrusive determination of respective flow rates of constituents in a multi-phase fluid flowing in a conduit, according to the invention may comprise the following steps. First, at step 1 data corresponding to a reaction of a material of the conduit to a passage of the multi-phase fluid there through may be acquired. It will be appreciated that he term 'acquiring' may relate to either carrying out measurement on the conduit using a suitable sensor, or accessing said data, which may be stored on a suitable data storage medium, or may be downloaded from a remote source. At step 2, suitable parameters, like flow-related events, may be determined from the data. For example, frequency and velocity of the fluid flow may be extracted from a spectrum acquired by a sensor. At steps 4a and 4b, use is made of a model, which is discussed with reference to the foregoing, which analytically relates the slug velocity $u_{slug}$ and the slug frequency $f_{slug}$ with superficial mixture velocity $U_m$ and superficial liquid velocity $U_{sl}$. By suitably inverting the model, and substituting values for $u_{slug}$ and $f_{slug}$ therein one obtains mixture velocity $U_m$ at step 4b and superficial velocity of liquid $U_{sl}$ at step 6. Finally, at step 6 a superficial velocity of gas is obtained by $U_m - U_{sl}$. Respective flow rates for the gas and the liquid are obtained by multiplying respective superficial velocities by cross-sectional area of a conduit at step 8.

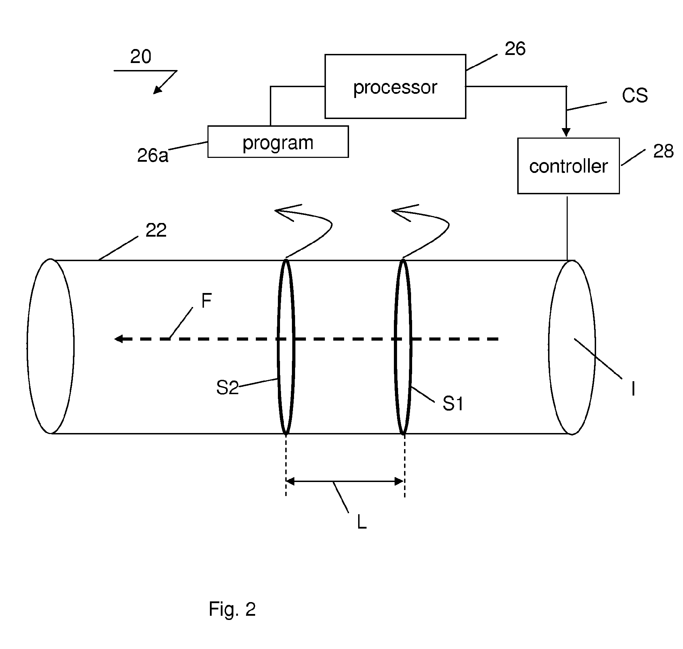

Figure 2 presents in a schematic way an embodiment of a system according to the invention. The system 20 may comprise one or more sensors S1, S2 arranged on or about a wall of the conduit 22 wherein a multi-phase fluid is flowing in direction, schematically indicated by F. In order to determine essential flow characteristics of the multi-phase flow in the conduit 22, a processed signal comprising data on a displacement of a conduit's wall may be analyzed. For example, a time lag between characteristic peaks may be determined, which, together with data on a distance L between the sensors, enables determination of the velocity.

It will be appreciated that examples of suitable sensors may comprise any sensor capable of detecting an acoustic and/or mechanic response of the wall of the conduit to an inner flow, like, for example, an optical sensor, a strain gauge or an accelerometer. It will be further appreciated that the sensors may be arranged to determine an absolute or a relative value of the wall's displacement, for example, pursuant to contraction or expansion of the wall. Alternatively or additionally, the sensors may be arranged to determine an acceleration or velocity of the wall in reaction to the fluid flowing in the conduit.

The sensors S1, s2 are preferably arranged to communicate measurement data to be processed by a processor 26. For example, a wireless communication may be used. The processor 26 in accordance with the invention is arranged to carry out suitable data processing steps in accordance with the method of the invention. Preferably, the processor 26 is operable by a computer program 26a comprising suitable instructions.

Upon an event the processor 26 determines flow rate data of constituents of the multi-phase fluid, for example, of a mixture of gas and oil, it may forward a control signal CS to a suitable system component, like a controller 28 for adapting flow into an inlet of the conduit 22. It will be appreciated that the term 'inlet' should be broadly interpreted, including a virtual inlet, i.e. a cross-section of the conduit preceding the sensors S1, S2. The flow of the multi-phase fluid may be adapted by adapting one or more valves (not shown) installed in communication with the conduit 22. It will be appreciated that the multi-phase flowmeter may be part of any suitable control system.

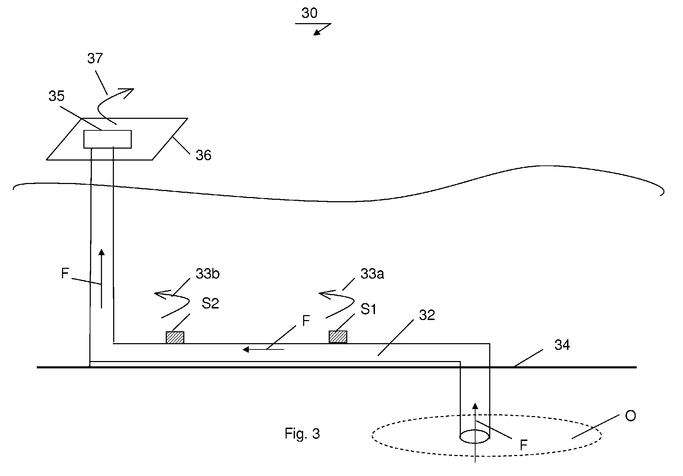

Figure 3 presents in a schematic way a further embodiment of a system according to the invention. In this particular embodiment the system 30 according to the invention is arranged to be exploited in submerged conditions. For example a flow of a gas/oil mixture may be monitored and/or may be controlled using the system according to the invention. A conduit 32, provided in fluid communication with an oil field O, comprises a flow F of a multi-phase fluid, which may be directed to a platform 36. The conduit 32 in accordance with the invention is provided with sensors S1 and S2, which are suitably housed to support functioning under water and under increased external pressure. It will be appreciated that due to the fact that the sensors S1 and S2 are arranged to detect a signal representative of a displacement of a conduit's wall, for the quality of the signal the external pressure does not play a substantial role. The sensors S1 and S2 may comprise housing or may be manufactured from a material which is water tight and which can sustain elevated pressures.

The sensors S1 and S2, preferably, operate using wireless communication for transferring data 33a, 33b to a remotely arranged processor 35 for data processing and control in accordance with the invention. The processor 35 may be arranged to wirelessly supply a control signal 37 for adapting a suitable operational parameter influencing fluid flow F in the conduit 32. In particular, the control signal 37 may be generated, when it is determined that the flow rates of the phases, like water and oil, are outside preferable operating conditions.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

## Claims

1. A method for a non- intrusive determination of respective flow rates of constituents in a multi-phase fluid flowing in a conduit, the method comprising the steps of:

   - acquiring data corresponding to a reaction of a material of the conduit to a passage of the multi-phase fluid there through;
   - determining one or more parameters related to the respective flow rates from said data;
   - applying said one or more parameters in a model for determining the respective flow rates.

2. A method according to claim 1, wherein the data comprises a data related to acoustic and/or mechanic disturbance of a wall of the conduit.

3. A method according to claim 2, wherein the acoustic and/or mechanic disturbance relates to a displacement, a velocity, or acceleration of the wall of the conduit.

4. A method according to claim 1, 2 or 3, wherein the data is acquired as a filtered signal, preferably, in a form of a spectrogram.

5. A method according to claim 4, wherein the step of determining one or more flow parameters comprises the step of extracting characteristic features of the filtered signal.

6. A method according to any one of the preceding claim, wherein the one or more parameters comprise a frequency and a velocity of the flow of the multi-phase fluid.

7. A method according to any one of the preceding claims, wherein the model comprises the following equations:

$$u_{slug} = (a + b\ln(cU_m))U_m$$

$$f_{slug} = d\left(\frac{U_{sl}}{gD}(\frac{e}{U_m} + U_m)\right)^f,$$

where

   $u_{slug}$ - is a slug velocity;
   $f_{slug}$ - is a slug frequency
   $U_m$ - is a mixture velocity;
   g - is a gravitational acceleration;
   D - is a diameter of the conduit;
   a ,b, c, d, e, f, - coefficients.

8. A method according to any one of the preceding claims, wherein the conduit is a part of a fluid delivery system, further comprising the step of adapting one or more of control parameters of the fluid delivery based on the determined flow rates.

9. A system for a non-intrusive determination of respective flow rates of constituents in a multi-phase fluid flowing in a conduit, the system comprising:

   - input for providing data corresponding to a reaction of a material of the conduit to a passage of the multi-phase fluid there through;
   - processor for:

      i. determining one or more parameters related to the respective flow rates from said data;
      ii. applying said one or more parameters in a model for determining the respective flow rates.

10. A system according to claim 9, further comprising one or more sensors for acquiring said data, said sensors being conceived to be arranged in contact with a wall of the conduit.

11. A system according to claim 10, wherein the one or more sensors are clamp-on sensors.

12. A system according to claim 10 or 11, wherein the sensor is arranged for detecting an acoustic and/or mechanic disturbance of a wall of the conduit.

**13.** A system according to claim 9, 10, 11 or 12, further comprising control means for controlling a flow of the fluid in the conduit, wherein the processor is further arranged to provide a control signal to the control means in response to determined respective flow rates.

**14.** A system according to claim 13, wherein the processor is arranged to provide the control signal when the respective flow rates fall outside a predetermined operational range.

**15.** A system according to any one of the preceding claims 9 - 14, adapted to operate in subsea conditions.

**16.** A system according to any one of the preceding claims 9 - 15, wherein the sensor is arranged to communicate the data wirelessly.

**17.** A computer program product for causing a processor to carry out the steps of the method according to any one of the preceding claims 1 - 8.

Fig. 1

Fig. 2

Fig. 3

Europäisches
Patentamt

European
Patent Office

Office européen
des brevets

# EUROPEAN SEARCH REPORT

Application Number

EP 08 16 7872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 674 155 A (TOTAL SA [FR]; SYMINEX SA [FR]) 27 September 1995 (1995-09-27) * column 1, line 1 - line 15 * * column 2, line 4 - line 18 * * figure 1 * ----- | 1-17 | INV. G01F1/74 |
| X | US 5 415 048 A (DIATSCHENKO VICTOR [US] ET AL) 16 May 1995 (1995-05-16) * column 2, line 25 - column 3, line 3; figure 1 * * column 3, line 16 - line 48 * ----- | 1-17 | |
| A | WREN E ET AL: "Slug flow in small diameter pipes and T-junctions" EXPERIMENTAL THERMAL AND FLUID SCIENCE, ELSEVIER SCIENCE INC, NEW YORK, US, vol. 29, no. 8, 1 September 2005 (2005-09-01), pages 893-899, XP025334498 ISSN: 0894-1777 [retrieved on 2005-09-01] * page 896 * ----- | 7 | |
| X | US 6 412 352 B1 (EVANS ROBERT P [US] ET AL) 2 July 2002 (2002-07-02)  * column 3, line 44 - column 4, line 67 * * figures 1-5 * ----- | 1-7, 9-12,16, 17 | TECHNICAL FIELDS SEARCHED (IPC) G01F |
| X | EP 0 465 032 A (BRITISH PETROLEUM CO PLC [GB]) 8 January 1992 (1992-01-08) * column 4, line 53 - column 5, line 21 * ----- | 1-6, 9-12,17 | |

The present search report has been drawn up for all claims

| Place of search | Date of completion of the search | Examiner |
|---|---|---|
| The Hague | 13 March 2009 | Bourhis, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 16 7872

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2009

| Patent document cited in search report | | Publication date | Patent family member(s) | | Publication date |
|---|---|---|---|---|---|
| EP 0674155 | A | 27-09-1995 | AU | 684889 B2 | 08-01-1998 |
| | | | AU | 1482495 A | 19-10-1995 |
| | | | CA | 2144557 A1 | 16-09-1995 |
| | | | DE | 69509576 D1 | 17-06-1999 |
| | | | FR | 2717573 A1 | 22-09-1995 |
| | | | JP | 7318392 A | 08-12-1995 |
| | | | NO | 950984 A | 18-09-1995 |
| | | | US | 5661248 A | 26-08-1997 |
| US 5415048 | A | 16-05-1995 | NONE | | |
| US 6412352 | B1 | 02-07-2002 | NONE | | |
| EP 0465032 | A | 08-01-1992 | CA | 2045716 A1 | 28-12-1991 |
| | | | NO | 912504 A | 30-12-1991 |
| | | | US | 5148405 A | 15-09-1992 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. Ismail et al.** Tomography for multi-phase flow measurement in the oil industry. *Flow Measurement and Instrumentation,* 2005, vol. 16, 145-155

- **E.S. Johansen et al.** A prototype wet-gas and multiphase flowmeter. *proceedings of the 25th North Sea Flow Measurement Workshop,* 16 October 2007